# EUROPÄISCHE PATENTANMELDUNG

(11) **EP 3 540 283 A1**
(43) Veröffentlichungstag der Anmeldung: **18.09.2019**
(21) Anmeldenummer: 19160173.1
(22) Anmeldetag: 01.03.2019
(51) Int. Cl.: F16L 29/00, F16L 37/12, F16L 37/14

(54) **HYDRAULIKVERBINDER**

(30) Priorität: 15.03.2018 DE 102018105981
(71) Anmelder: Vaillant GmbH, 42859 Remscheid (DE)
(72) Erfinder: Vierneisel, Constantin, 42659 Solingen (DE); Sinsteden, Claudia, 42369 Wuppertal (DE); Weber, Stefan, 93412 Cham (DE); Riecke, Harald, 42853 Remscheid (DE)
(74) Vertreter: Popp, Carsten

(57) **Zusammenfassung**

Eine Kombination eines Hydraulikverbinders (6) mit zwei zylindrische Buchsen (9.1, 9.2) mit zwei Rohren (1, 8) sieht vor, dass die erste Buchse (9.1) über eine Länge Iₐ verfügt, das erste Rohr (1), welches mit der ersten Buchse (9.1) verbunden wird, über zwei Falze (4), welche durch ihre Erstreckung nach außen lokal den Durchmesser des ersten Rohrs (1) vergrößern, am Ende des Rohres (1) verfügen, die beiden Falz (4) in einem Abstand I₁ voreinander angeordnet, in diesem Abstand eine Dichtung (3) angeordnet ist, die Länge Iₐ, mindestens zweimal so lang wie der Abstand I₁ ist, der Durchmesser der Falze (4) des ersten Rohres (1) geringfügig kleiner als der Durchmesser der ersten Buchse (9.1) ist und eine Vorrichtung zum Fixieren des ersten Rohres (1) in der ersten Buchse (9.1) vorhanden ist.

## Beschreibung

Die Erfindung bezieht sich auf einen Hydraulikverbinder für Fluide in Heizungsanlagen.

In Heizungsanlagen werden Geräteanschlüsse mit Wärmetauschern und Speichern über Rohre verbunden. Bei Hydraulikverbindern für Fluide in Heizungsanlagen gibt es mehrere Anforderungen. So müssen vorrangig die Verbindungen dicht sein. Ferner ist vorteilhaft, wenn die Verbindungselemente tolerant gegenüber Fertigungstoleranzen sind und hierbei entweder Winkel- und Längenabweichungen kompensieren oder die daraus resultierenden Kräfte aufnehmen können. Bei einer festen Verbindung muss eine Verbindung Torsions-, Biege-, Zug- und Druckkräfte kompensieren.

Aufgabe der Erfindung ist einen Hydraulikverbinder zu schaffen, welcher Toleranzen beim Einbau der zu verbindenden Rohre ausgleichen kann.

Diese Aufgabe wird erfindungsgemäß dadurch gelöst, dass die Verbindung sowohl Mittel zur Kompensation von Verdrehungen als auch Längenänderungen der zu verbindenden Leitungen aufweist.

Vorteilhafte Ausgestaltungen ergeben sich aus den Merkmalen der abhängigen Ansprüche.

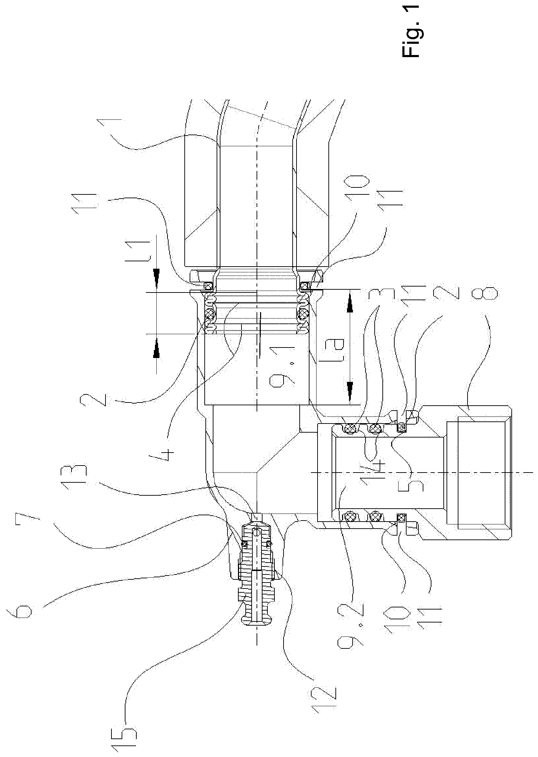

Die Erfindung wird anhand der Figur näher erläutert. Hierbei zeigen

Die Figur zeigt einen Hydraulikverbinder 6 mit zwei zu verbindenden Rohren 1, 8. Bei dem zweiten Rohr 8 handelt es sich in diesem Fall um einen rohrförmigen Adapter zum Anschluss eines weiteren Rohres. Der Hydraulikverbinder 6 ist als 90°-Winkelstück ausgeführt und verfügt über rechtwinklig zueinander angeordnete zylindrische Buchsen 9.1, 9.2 an beiden Enden zur Aufnahme der Rohre 1, 8. Die beiden Buchsen 9.1, 9.2 verfügen an ihren äußeren Enden über kegelförmige Erweiterungen 10. In diesen kegelförmigen Erweiterungen 10 befinden sich jeweils zwei gegenüberliegende Schlitze 11. Gegenüber der einen Buchse 9.1, rechtwinklig zur anderen, zweiten Buchse 9.2, befindet sich eine über eine Bohrung 13 verbundene Aufnahme 12 mit Innengewinde für ein Entlüftungsventil 15. Das Entlüftungsventil 15 wird in die Aufnahme 12 eingeschraubt, wobei eine Ringdichtung 7 die Verbindung abdichtet.

Das erste Rohr 1 verfügt über zwei Falze 4, welche durch ihre Erstreckung nach außen lokal den Durchmesser des ersten Rohrs 1 vergrößern. Einer der Falze 4 ist direkt am Ende des Rohres 1, der andere Falz in einem Abstand I₁ angeordnet. Zwischen denen Falzen 4 ist ein O-Ring 3 als Dichtung aufgezogen. Das zweite Rohr 8 verfügt im Endbereich über 3 umlaufende Nuten 14, 5. Die zwei Nuten 14 am äußeren Ende des Rohres 8 verfügen über eine abgerundete Kontur und dienen der Aufnahme von O-Ringen 3. Die dritte Nut 5 verfügt über ein rechteckiges Profil und dient der Aufnahme einer Sicherungsklammer 2.

Die erste Buchse 9.1 verfügt über eine Länge Iₐ, welche wesentlich länger ist als der Abstand I₁ angeordnet zwischen den beiden Falzen 4 des ersten Rohres 1. Der Durchmesser der Falze 4 des ersten Rohres 1 ist geringfügig kleiner als der Durchmesser der ersten Buchse 9.1.

Wird das erste Rohr 1 in die erste Buchse 9.1 geschoben, so hilft die kegelförmige Erweiterung 10 beim Einführen. Der O-Ring 3 zwischen den zwei Falzen 4 dichtet das erste Rohr 1 gegenüber der ersten Buchse 9.1. Hat die dem Ende des ersten Rohres 1 abgewandte Falz 4 die zwei gegenüberliegende Schlitze 11 beim Einschieben überschritten, so wird eine Sicherungsklammer 2 in die zwei gegenüberliegenden Schlitze 11 eingeschoben, so dass das erste Rohr 1 nicht mehr aus der ersten Buchse 9.1 gleiten kann. Da das erste Rohr 1 auf der dem Ende abgewandten Seite der beiden Falzen 4 zumindest in einem sich unmittelbar anschließenden Teilbereich einen Durchmesser besitzt, welcher nicht größer, als der Abstand der zwei gegenüberliegenden Schlitze 11 ist, kann sich das erste Rohr 1 in Richtung des Inneren der ersten Buchse 9.1 bewegen. Da der Abstand der zwei gegenüberliegenden Schlitze 11 kleiner als der Außendurchmesser der Falze 4 ist, kann das erste Rohr 1 sich axial in der ersten Buchse 9.1 bewegen.

Wird das zweite Rohr 8 in die zweite Buchse 9.2 geschoben, so hilft auch hier die kegelförmige Erweiterung 10 beim Einführen. Der Durchmesser der zweiten Buchse 9.2 ist geringfügig größer als der Durchmesser des zweiten Rohres 8 an dessen Ende, welches in die zweite Buchse eingeführt wird. Die beiden O-Ringe 3 in den Nuten 14 dichten das zweite Rohr 8 zur zweiten Buchse 9.2. Das zweite Rohr 8 wird soweit in die zweite Buchse 9.2 eingeschoben, bis ein Sicherungsring 2 durch die zwei gegenüberliegende Schlitze 11 in die Nut 5 mit rechteckigem Profil eingreift und somit das zweite Rohr 8 in der zweiten Buchse 9.2 axial fixiert.

Beide Rohre 1, 8 sind nun beide derart fixiert, dass die Rohre 1, 8 Drehbewegungen in den Buchsen 9.1, 9.2 vornehmen können. Lediglich das erste Rohr 1 ist axial schwimmend gelagert, während das zweite Rohr 2 axial fixiert ist.

Die Bauform ermöglicht Kompensation von Verdrehungen als auch Längenänderungen, sondern ermöglicht durch die Aufnahme des Entlüftungsventils 15 eine Integration von Funktionen.

### Bezuaszeichenliste

- 1: erstes Rohr
- 2: Sicherungsklammer
- 3: O-Ring
- 4: Falz
- 5: Nut
- 6: Hydraulikverbinder
- 7: Rinddichtung
- 8: zweites Rohr
- 9.1: erste Buchse
- 9.2: zweite Buchse
- 10: Erweiterung
- 11: Schlitze
- 12: Aufnahme
- 13: Bohrung
- 14: Nut
- 15: Entlüftungsventil

## Patentansprüche

1. Kombination eines Hydraulikverbinders (6) mit zwei zylindrische Buchsen (9.1, 9.2) mit zwei Rohren (1, 8), **dadurch gekennzeichnet, dass** die erste Buchse (9.1) über eine Länge Iₐ verfügt, das erste Rohr (1), welches mit der ersten Buchse (9.1) verbunden wird, über zwei Falze (4), welche durch ihre Erstreckung nach außen lokal den Durchmesser des ersten Rohrs (1) vergrößern, am Ende des Rohres (1) verfügen, die beiden Falz (4) in einem Abstand I₁ voreinander angeordnet, in diesem Abstand eine Dichtung (3) angeordnet ist, die Länge Iₐ, mindestens zweimal so lang wie der Abstand I₁ ist, der Durchmesser der Falze (4) des ersten Rohres (1) geringfügig kleiner als der Durchmesser der ersten Buchse (9.1) ist und eine Vorrichtung zum Fixieren des ersten Rohres (1) in der ersten Buchse (9.1) vorhanden ist.

2. Kombination eines Hydraulikverbinders (6) mit zwei Rohren (1, 8) nach Anspruch 1 oder 2, **dadurch gekennzeichnet, dass** mindestens eine der beiden Buchsen (9.1, 9.2) an ihrem äußeren Ende über eine kegelförmige Erweiterung (10) verfügt.

3. Kombination eines Hydraulikverbinders (6) mit zwei Rohren (1, 8) nach einem der Ansprüche 1 oder 2, **dadurch gekennzeichnet, dass** an der ersten Buchse (9.1) oder der kegelförmigen Erweiterung (10) an der ersten Buchse (9.1) Schlitzen (11) zur Aufnahme einer Sicherungsklammer (2) vorhanden sind.

4. Kombination eines Hydraulikverbinders (6) mit zwei Rohren (1, 8) nach einem der Ansprüche 1 bis 3, **dadurch gekennzeichnet, dass** an der zweiten Buchse (9.2) oder der kegelförmigen Erweiterung (10) an der zweiten Buchse (9.2) Schlitzen (11) zur Aufnahme einer Sicherungsklammer (2) vorhanden sind, das zweite Rohr (8) über eine Nut (5) verfügt, und mittels einer Sicherungsklammer (2), welche durch die Schlitze (11) in die Nut (5) ragt, die zweite Buchse (9.2) mit dem zweiten Rohr (8) axial fixiert verbunden ist.

5. Kombination eines Hydraulikverbinders (6) mit zwei Rohren (1, 8) nach einem der Ansprüche 1 bis 4, **dadurch gekennzeichnet, dass** die beiden Buchsen (9.1, 9.2) rechtwinklig zueinander angeordnet sind und gegenüber der einen Buchse (9.1), rechtwinklig zur anderen Buchse (9.2), sich eine über eine Bohrung (13) verbundene Aufnahme (12) mit Innengewinde für ein Entlüftungsventil (15) befindet.
